# EUROPEAN PATENT APPLICATION

(11) **EP 4 631 813 A1**
(43) Date of publication of application: **15.10.2025**
(21) Application number: 23915685.4
(22) Date of filing: 02.11.2023
(51) Int. Cl.: B60W 30/09, B60W 30/095, B60W 60/00

(54) **DECISION-MAKING METHOD AND RELATED APPARATUS**

(30) Priority: 09.01.2023 CN 202310026379
(71) Applicant: Shenzhen Yinwang Intelligent Technologies Co., Ltd., Shenzhen, Guangdong 518110 (CN)
(72) Inventor: ZHAO, Shangyu, Shenzhen, Guangdong 518129 (CN); DAI, Zhengchen, Shenzhen, Guangdong 518129 (CN); ZHANG, Ziqi, Shenzhen, Guangdong 518129 (CN); WU, Hansheng, Shenzhen, Guangdong 518129 (CN)
(74) Representative: Gill Jennings & Every LLP
(86) International application number: PCT/CN2023/129271
(87) International publication number: WO 2024/148927

(57) **Abstract**

Embodiments of this application relate to the field of intelligent vehicles and provide a decision-making method and a related apparatus. The method includes: obtaining first environment information of a first lane, where a vehicle travels in the first lane; determining, based on the first environment information, that a first TTCD cluster is distributed in the first lane, where the first TTCD cluster includes at least one TTCD; determining a distribution status of the first TTCD cluster in the first lane, where the distribution status indicates a relative position relationship between the at least one TTCD and the first lane; and determining a driving strategy based on the distribution status of the first TTCD cluster in the first lane. Based on the solution, the driving strategy can be more accurately and appropriately determined based on the distribution status of the first TTCD cluster in the first lane, to provide a plan for the vehicle to bypass an obstacle, change a lane, or brake, thereby improving decision-making safety.

## Description

This application claims priority to Chinese Patent Application No. 202310026379.2, filed with the China National Intellectual Property Administration on January 9, 2023 and entitled "DECISION-MAKING METHOD AND RELATED APPARATUS", which is incorporated herein by reference in its entirety.

### TECHNICAL FIELD

This application relates to the field of intelligent vehicles, and more specifically, to a decision-making method and a related apparatus.

### BACKGROUND

The increasingly mature autonomous driving technology is gradually widely applied to intelligent vehicles, to assist or take over for a driver to control vehicle traveling. However, in a process of controlling vehicle traveling, some special road conditions are inevitably encountered, for example, construction of a road ahead, or a traffic accident on a road ahead. In these cases, a traffic cone is usually used to warn a vehicle approaching a construction site or an accident site, to indicate the vehicle to bypass, so as to avoid an accident. This requires an automated driving system to accurately identify a scenario and develop a driving strategy, to plan a lane change or avoid an obstacle.

It is difficult to ensure safety and robustness of the driving strategy due to a complex actual road condition and a limited sensing capability of the automated driving system.

Therefore, how to ensure high safety and robustness of the driving strategy determined by the automated driving system is a problem to be urgently resolved.

### SUMMARY

Embodiments of this application provide a decision-making method and a related apparatus, to determine a driving strategy of a vehicle by determining a distribution status of a temporary traffic control device (temporary traffic control device, TTCD) placed in a first lane. This method can ensure high safety and robustness of a driving strategy determined by an automated driving system, that is, the driving strategy can be more accurately and appropriately formulated, to provide a plan for a vehicle to bypass an obstacle, change a lane, or brake.

According to a first aspect, a decision-making method is provided. The method includes: obtaining first environment information of a first lane, where the vehicle travels in the first lane; determining, based on the first environment information, that a first TTCD cluster is distributed in the first lane, where the first TTCD cluster includes at least one TTCD; determining a distribution status of the first TTCD cluster in the first lane, where the distribution status indicates a relative position relationship between the at least one TTCD and the first lane; and determining a driving strategy based on the distribution status of the first TTCD cluster in the first lane.

For example, the TTCD may be a traffic cone, a traffic tube, a traffic pillar, a traffic water-filled barrier, or the like.

For example, the first environment information may be the environment information around the vehicle provided in the foregoing embodiment, and may be obtained by using a vehicle-mounted sensor.

For example, the driving strategy may include obstacle bypassing, lane changing, or braking.

Based on the technical solution, the driving strategy can be more accurately and appropriately determined based on the distribution status of the first TTCD cluster in the first lane, to provide a plan for the vehicle to bypass an obstacle, change a lane, or brake, thereby improving decision-making safety.

With reference to the first aspect, in some implementations of the first aspect, when the distribution status of the first TTCD cluster in the first lane is a first state, it is determined that the driving strategy is a first strategy, where the first strategy is to control the vehicle to bypass the first TTCD cluster at a first speed.

For example, the first speed is less than a current traveling speed of the vehicle. In this way, the vehicle can decelerate in advance in a process of bypassing the first TTCD cluster in the first lane, to avoid a collision caused by a vehicle's inability to evade due to a sudden change in the distribution status of the first TTCD cluster or a road environment in the first lane.

Based on the technical solution, when a detection range of a sensor is limited, the vehicle can limit the speed of the vehicle in advance in a process of bypassing the first TTCD cluster, so that the vehicle can avoid a collision caused by a failure of avoidance when a distribution status of the first TTCD cluster is suddenly changed, in addition to improving decision-making safety, decision-making robustness is also improved.

With reference to the first aspect, in some implementations of the first aspect, the first state includes: A minimum distance between a first edge line of the first TTCD cluster and a road center line of the first lane is greater than or equal to a first threshold, and the first edge line is an edge line that is of the first TTCD cluster and that extends along a direction of the first lane.

For example, a type of the first lane may be deduced based on a quantity of lanes included in a current road, to determine a width of the first lane, and then adjust the first threshold in real time. For example, it is known that a bidirectional four-lane is 2×7.5 m. In this case, the width of the first lane is 3.25 m, and a corresponding first threshold may be 0.5 m. A bidirectional six-lane is 2×11.25 m. In this case, the width of the first lane is 3.75 m, and a corresponding first threshold may be 0.6 m. A bidirectional eight-lane is 2×15 m. In this case, the width of the first lane is 3.75 m, and a corresponding first threshold may be 0.6 m.

For example, based on the foregoing example, the first threshold may be further determined with reference to the width of the vehicle.

Based on the foregoing technical solution, the first state is appropriately defined, to ensure that the vehicle can safely bypass the first TTCD cluster in the first lane, thereby improving feasibility of executing the first strategy by the vehicle, and improving safety and robustness of a decision-making.

With reference to the first aspect, in some implementations of the first aspect, before determining that the driving strategy is the first strategy, second environment information is determined based on the first state, the second environment information includes at least one of the following: a length of the first edge line of the first TTCD cluster, an included angle between the first edge line of the first TTCD cluster and the road center line of the first lane, and a minimum distance between the vehicle and the first TTCD cluster; and the first speed is determined based on the second environment information.

For example, a longer first edge line indicates a lower first speed; a larger included angle between the first edge line and the road center line of the first lane indicates a lower first speed; and a smaller minimum distance between the vehicle and the first TTCD cluster indicates a lower first speed.

Based on the foregoing technical solution, a vehicle speed at which the vehicle bypasses the first TTCD cluster can be appropriately controlled based on the obtained second environment information, to avoid an excessively high vehicle speed in a process in which the vehicle bypasses an obstacle, and improve safety and robustness of a decision-making.

With reference to the first aspect, in some implementations of the first aspect, when the distribution status of the first TTCD cluster in the first lane is a second state, third environment information of an adjacent lane of the first lane is determined; a road condition of the adjacent lane is determined based on the third environment information; and based on the road condition of the adjacent lane, it is determined that the driving strategy is a second strategy or a third strategy.

For example, the second state is all statuses other than the first state. In other words, in the second state, it indicates that the current vehicle cannot bypass the first TTCD cluster in the first lane.

Based on the foregoing technical solution, in consideration of a case in which the vehicle cannot bypass the first TTCD cluster in the first lane, a driving strategy other than bypassing an obstacle in the lane is determined by obtaining a road condition of an adjacent lane. This improves flexibility and safety of a decision-making.

With reference to the first aspect, in some implementations of the first aspect, the second state includes: The minimum distance between the first edge line of the first TTCD cluster and the road center line of the first lane is less than the first threshold.

Based on the foregoing technical solution, the second state is appropriately defined, to ensure that the vehicle can avoid a collision with the first TTCD cluster, thereby improving decision-making safety.

With reference to the first aspect, in some implementations of the first aspect, when the road condition of the adjacent lane meets a first lane change condition, it is determined that the driving strategy is the second strategy, where the second strategy is to control the vehicle to change to the adjacent lane for traveling; or when the road condition of the adjacent lane does not meet the first lane change condition, it is determined that the driving strategy is a third strategy, where the third strategy is to control the vehicle to brake in the first lane.

For example, whether the road condition of the adjacent lane meets a first lane change condition may be comprehensively determined based on a recognition result of a traffic sign recognition TSR (traffic sign recognition) system, road condition information of the adjacent lane collected by the sensor carried on the vehicle, and a confidence level of corresponding information.

Based on the foregoing technical solution, environment information of the first lane and the adjacent lane is fully collected, to ensure safety and rationality of vehicle decision-making, and avoid a safety risk caused by lane change when the vehicle does not meet the lane change condition.

With reference to the first aspect, in some implementations of the first aspect, the first lane change condition includes: The vehicle is allowed to change between the first lane and the adjacent lane, a front of the adjacent lane is not occupied, and no other vehicle travels at a lateral rear of the adjacent lane.

For example, that the road condition of the adjacent lane meets the first lane change condition indicates that all the foregoing conditions included in the first lane change condition are met. If any one of the first lane change conditions is not met, it indicates that the road condition of the adjacent lane does not meet the first lane change condition.

Based on the foregoing technical solution, a front or rear traffic condition of an adjacent lane is fully obtained, and a traffic rule factor of a current road is also considered, to determine whether a vehicle can appropriately and safely change a lane, to avoid the first TTCD cluster. This avoids a safety risk caused by lane change when the vehicle does not meet the lane change condition, and further improves safety of the driving strategy.

With reference to the first aspect, in some implementations of the first aspect, when the driving strategy is the third strategy, a braking strategy of the vehicle is determined based on a position relationship between a first TTCD in the first TTCD cluster and the vehicle, where the first TTCD is a TTCD closest to the vehicle in the first TTCD cluster.

For example, an expected braking distance of the vehicle may be determined, to determine an operation for controlling the vehicle to brake. The braking distance may be less than a distance between the vehicle and the first TTCD.

Based on the foregoing technical solution, when the vehicle uses the third strategy, the vehicle can brake as early as possible, to reduce a collision risk of the vehicle in a braking process, make a decision-making more humanistic, and improve driving experience of a user.

With reference to the first aspect, in some implementations of the first aspect, the distribution status of the first TTCD cluster in the first lane is identified based on a cluster fitting manner.

For example, the clustering algorithm may be a K-means (K-means) algorithm, a hierarchical clustering algorithm, or a self-organizing feature map (Self-Organizing feature Map, SOM) clustering algorithm.

Based on the foregoing technical solution, the distribution status of the first TTCD cluster in the first lane can be accurately identified, thereby ensuring reliability and accuracy of a decision-making.

According to a second aspect, a decision-making apparatus is provided. The apparatus includes: an obtaining unit, configured to obtain first environment information of a first lane, where a vehicle travels in the first lane; and a determining unit, configured to: determine, based on the first environment information, that a first TTCD cluster is distributed in the first lane, where the first TTCD cluster includes at least one TTCD; determine a distribution status of the first TTCD cluster in the first lane, where the distribution status indicates a relative position relationship between the at least one TTCD and the first lane; and determine a driving strategy based on the distribution status of the first TTCD cluster in the first lane.

Based on the technical solution, the driving strategy can be more accurately and appropriately determined based on the distribution status of the first TTCD cluster in the first lane, to provide a plan for the vehicle to bypass an obstacle, change a lane, or brake.

With reference to the second aspect, in some implementations of the second aspect, the determining unit is specifically configured to: when the distribution status of the first TTCD cluster in the first lane is a first state, determine that the driving strategy is a first strategy, where the first strategy is to control the vehicle to bypass the first TTCD cluster at a first speed.

Based on the technical solution, when a detection range of a sensor is limited, the vehicle can limit the speed of the vehicle in advance in a process of bypassing the first TTCD cluster, so that the vehicle can avoid a collision caused by a failure of avoidance when a distribution status of the first TTCD cluster is suddenly changed.

With reference to the second aspect, in some implementations of the second aspect, the first state includes: A minimum distance between a first edge line of the first TTCD cluster and a road center line of the first lane is greater than or equal to a first threshold, and the first edge line is an edge line that is of the first TTCD cluster and that extends along a direction of the first lane.

Based on the foregoing technical solution, the first state is appropriately defined, to ensure that the vehicle can safely bypass the first TTCD cluster in the first lane, thereby improving feasibility of executing the first strategy by the vehicle, and improving safety and robustness of a decision-making.

With reference to the second aspect, in some implementations of the second aspect, before determining that the driving strategy is the first strategy, the determining unit is further configured to: determine second environment information based on the first state, where the second environment information includes at least one of the following: a length of the first edge line of the first TTCD cluster, an included angle between the first edge line of the first TTCD cluster and the road center line of the first lane, and a minimum distance between the vehicle and the first TTCD cluster; and determine the first speed based on the second environment information.

Based on the foregoing technical solution, a vehicle speed at which the vehicle bypasses the first TTCD cluster can be appropriately controlled based on the obtained second environment information, to avoid an excessively high vehicle speed in a process in which the vehicle bypasses an obstacle, and improve safety and robustness of a decision-making.

With reference to the second aspect, in some implementations of the second aspect, the determining unit is specifically configured to: when the distribution status of the first TTCD cluster in the first lane is a second state, determine third environment information of an adjacent lane of the first lane; determine a road condition of the adjacent lane based on the third environment information; and determine, based on the road condition of the adjacent lane, that the driving strategy is a second strategy or a third strategy.

Based on the foregoing technical solution, in consideration of a case in which the vehicle cannot bypass the first TTCD cluster in the first lane, a driving strategy other than bypassing an obstacle in the lane is determined by obtaining a road condition of an adjacent lane. This improves flexibility and safety of a decision-making.

With reference to the second aspect, in some implementations of the second aspect, the second state includes: The minimum distance between the first edge line of the first TTCD cluster and the road center line of the first lane is less than the first threshold.

Based on the foregoing technical solution, the second state is appropriately defined, to ensure that the vehicle can avoid a collision with the first TTCD cluster, thereby improving decision-making safety.

With reference to the second aspect, in some implementations of the second aspect, the determining unit is specifically configured to: when the road condition of the adjacent lane meets a first lane change condition, determine that the driving strategy is the second strategy, where the second strategy is to control the vehicle to change to the adjacent lane for traveling; or when the road condition of the adjacent lane does not meet the first lane change condition, determine that the driving strategy is the third strategy, where the third strategy is to control the vehicle to brake in the first lane.

Based on the foregoing technical solution, environment information of the first lane and the adjacent lane is fully collected, to ensure safety and rationality of vehicle decision-making, and avoid a safety risk caused by lane change when the vehicle does not meet the lane change condition.

With reference to the second aspect, in some implementations of the second aspect, the first lane change condition includes: The vehicle is allowed to change between the first lane and the adjacent lane, a front of the adjacent lane is not occupied, and no other vehicle travels at a lateral rear of the adjacent lane.

Based on the foregoing technical solution, a front or rear traffic condition of an adjacent lane is fully obtained, and a traffic rule factor of a current road is also considered, to determine whether a vehicle can appropriately and safely change a lane, to avoid the first TTCD cluster. This avoids a safety risk caused by lane change when the vehicle does not meet the lane change condition, and further improves safety of the driving strategy.

With reference to the second aspect, in some implementations of the second aspect, when the driving strategy is the third strategy, the determining unit is further configured to: determine a braking strategy of the vehicle based on a position relationship between a first TTCD in the first TTCD cluster and the vehicle, where the first TTCD is a TTCD closest to the vehicle in the first TTCD cluster.

Based on the foregoing technical solution, when the vehicle uses the third strategy, the vehicle can brake as early as possible, to reduce a collision risk of the vehicle in a braking process, make a decision-making more humanistic, and improve driving experience of a user.

With reference to the second aspect, in some implementations of the second aspect, the distribution status of the first TTCD cluster in the first lane is identified based on a cluster fitting manner.

Based on the foregoing technical solution, the distribution status of the first TTCD cluster in the first lane can be accurately identified, thereby ensuring reliability and accuracy of a decision-making.

According to a third aspect, a decision-making apparatus is provided, including a processor and a memory. The processor is connected to the memory, the memory is configured to store program code, and the processor is configured to invoke the program code, to perform the method in any possible implementation of the method design of the first aspect.

According to a fourth aspect, a chip system is provided, the chip system is applied to an electronic device; the chip system includes one or more interface circuits and one or more processors; the interface circuit and the processor are interconnected through a line; the interface circuit is configured to receive a signal from a memory of the electronic device, and send the signal to the processor, where the signal includes computer instructions stored in the memory; and when the processor executes the computer instructions, the electronic device performs the method in any possible implementation of the method design of the first aspect.

According to a fifth aspect, a computer-readable storage medium is provided, and stores a computer program or instructions. The computer program or the instructions are used to implement the method in any possible implementation of the method design of the first aspect.

According to a sixth aspect, a computer program product is provided. When the computer program code or instructions are executed on a computer, the computer is enabled to perform the method in any possible implementation of the method design of the first aspect.

According to a seventh aspect, a vehicle is provided. The vehicle includes the apparatus in any possible implementation of the second aspect or the third aspect.

### BRIEF DESCRIPTION OF DRAWINGS

FIG. 1 is a functional block diagram of a vehicle 100 according to an embodiment of this application;
FIG. 2 shows an automated driving system 200 applicable to an embodiment of this application according to an embodiment of this application;
FIG. 3 is a schematic flowchart of a decision-making method according to an embodiment of this application;
FIG. 4 is a diagram of a detection range of a sensing system according to an embodiment of this application;
FIG. 5(a) and FIG. 5(b) are diagrams of a first TTCD cluster distributed in a first state according to an embodiment of this application;
FIG. 6(a) and FIG. 6(b) are diagrams of an expected effect of decision-making and post-processing according to an embodiment of this application;
FIG. 7 is a schematic flowchart of another decision-making method according to an embodiment of this application;
FIG. 8 is a schematic flowchart of another decision-making method according to an embodiment of this application;
FIG. 9 is a block diagram of a decision-making apparatus 900 according to an embodiment of this application;
FIG. 10 is a block diagram of a decision-making apparatus according to an embodiment of this application; and
FIG. 11 is a block diagram of a computer-readable storage medium according to an embodiment of this application.

### DESCRIPTION OF EMBODIMENTS

The following describes technical solutions in embodiments of this application with reference to accompanying drawings.

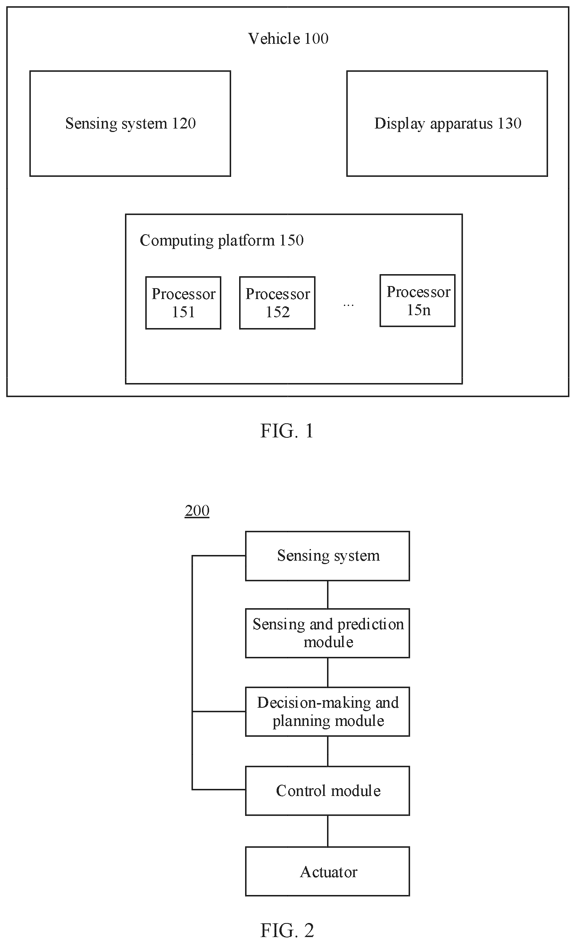

FIG. 1 is a functional block diagram of a vehicle 100 according to an embodiment of this application. The vehicle 100 may include a sensing system 120, a display apparatus 130, and a computing platform 150. The sensing system 120 may include several types of sensors that sense information about an ambient environment of the vehicle 100. For example, the sensing system 120 may include a positioning system. The positioning system may be a global positioning system (global positioning system, GPS), or may be one or more of a BeiDou system or another positioning system, an inertial measurement unit (inertial measurement unit, IMU), a lidar, a millimeter-wave radar, an ultrasonic radar, and a camera apparatus.

Some or all functions of the vehicle 100 may be controlled by the computing platform 150. The computing platform 150 may include processors 151 to 15n (where n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (Field Programmable Gate Array, FPGA). In a reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 150 may further include a memory. The memory is configured to store instructions. Some or all of the processors 151 to 15n may invoke the instructions in the memory, to implement a corresponding function.

FIG. 2 shows an automated driving system 200 applicable to an embodiment of this application according to an embodiment of this application.

The automated driving system 200 includes a sensing system, a sensing and prediction module, a decision-making and planning module, a control module, and an actuator.

In some possible embodiments, the sensing system belongs to the sensing system 120, and is configured to collect environment information around a vehicle, motion status information of an ego vehicle, and the like. The environment information around the vehicle may include a front road condition of a current driving lane, a road condition of an adjacent lane, obstacle target information, and the like, and may be collected by using the lidar. The motion status information of the ego vehicle may include a vehicle speed, an acceleration, a turning angle, and the like, and may be obtained by using a sensor deployed on a chassis of the vehicle. Then, the information is transmitted to the sensing and prediction module.

In some possible embodiments, the obstacle may be a TTCD, and further, may be a traffic cone, a traffic tube, a traffic pillar, a traffic water-filled barrier, or the like.

The sensing and prediction module may be the computing platform 150 provided in the foregoing embodiment, and is configured to: process data information collected by the sensing system, and use related information such as a road and an obstacle that is obtained through processing as an input of a downstream module. A processing result is transmitted to the decision-making and planning module.

The decision-making and planning module is configured to: determine a driving decision-making based on the related information included in the processing result, where the driving decision-making includes an expected track of vehicle traveling; and transmit the driving decision-making to the control module.

The control module is configured to: calculate a corresponding control value based on the driving decision-making, and transmit the control value to the actuator.

The actuator may be a steering wheel of the vehicle, a throttle of the vehicle, a braking apparatus, or the like, and controls a traveling status, for example, lane change, acceleration, or deceleration, of the vehicle based on the control value.

Based on the automated driving system 200, it can be ensured that the vehicle can safely and stably travel in an ideal road condition. However, in an actual driving scenario, the road condition is complex, for example, a road ahead is under construction, or a traffic accident occurs on a road ahead. In these cases, a TTCD is usually placed on the road to warn a vehicle close to a construction site or accident site to indicate the vehicle to bypass, so as to avoid an accident.

In an existing decision-making method, whether to control the vehicle to change a lane is usually determined based on only a current lane environment condition, and only one expected traveling path of the vehicle is provided. This ignores whether the current vehicle has a lane change condition at any moment in a process of traveling along the expected path, that is, ignores a risk of the vehicle traveling along the expected path.

In view of this, embodiments of this application provide a decision-making method, to make a driving decision-making by analyzing a distribution status of a TTCD placed on the road and a traffic status of an adjacent lane, so as to determine how to control the vehicle.

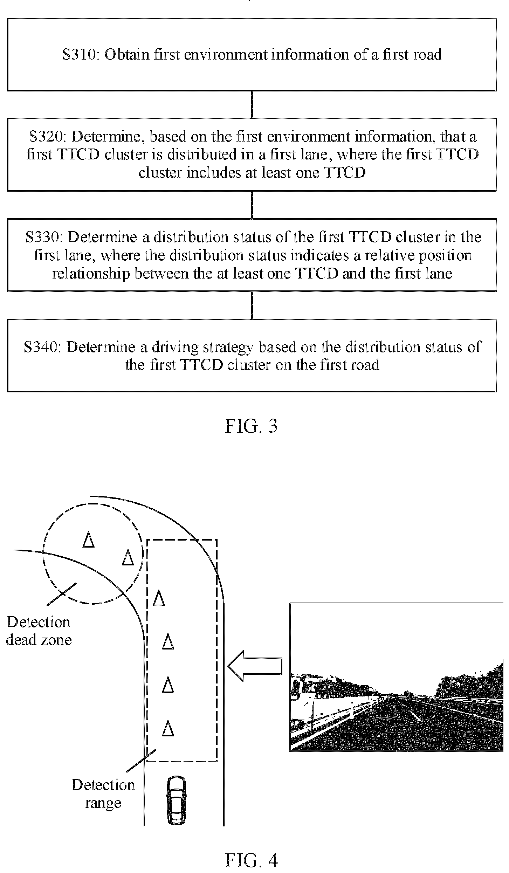

FIG. 3 is a schematic flowchart of a decision-making method according to an embodiment of this application.

S310: Obtain first environment information of a first lane.

In some possible embodiments, the first environment information may be the environment information around the vehicle provided in the foregoing embodiment, and may be obtained by using the sensing system provided in the foregoing embodiment.

S320: Determine, based on the first environment information, that a first TTCD cluster is distributed in the first lane, where the first TTCD cluster includes at least one TTCD.

S330: Determine a distribution status of the first TTCD cluster in the first lane, where the distribution status indicates a relative position relationship between the at least one TTCD and the first lane.

In some possible embodiments, the sensing and prediction module provided in the foregoing embodiment may be used to analyze the first environment information, to determine the distribution status of the first TTCD cluster in the first lane. The distribution status includes but is not limited to a central point position and distribution of the TTCD in a first lane coordinate system.

In some possible embodiments, a clustering operation may be performed on the TTCDs based on the first environment information and a clustering algorithm, to merge TTCDs (a traffic cone, a traffic tube, a traffic pillar, a traffic water-filled barrier, and the like) of a specified type that are placed in the first lane, and remove an unrelated TTCD, for example, a TTCD distributed outside the first lane, to determine the first TTCD cluster. Then, an edge line of the first TTCD and the central point position and distribution of the TTCD in the first lane coordinate system may be determined based on a fitting algorithm, for example, a least square method or Hough transform.

In some possible embodiments, when the first TTCD cluster includes a plurality of TTCDs, the distribution status further includes a relative position relationship between the plurality of TTCDs.

In some possible embodiments, the clustering algorithm may be a K-means algorithm, a hierarchical clustering algorithm, or a SOM clustering algorithm.

S340: Determine a driving strategy based on the distribution status of the first TTCD cluster in the first lane.

In some possible embodiments, the driving strategy may include obstacle bypassing, lane changing, or braking.

Based on the technical solution, the driving strategy can be more accurately and appropriately determined based on the distribution status of the first TTCD cluster in the first lane, to plan to bypass an obstacle, change a lane, or brake, thereby improving decision-making safety.

In some possible embodiments, the distribution status may be represented by using a proportion that the first TTCD cluster horizontally occupies the first lane, or may be represented by using a minimum distance between a first edge line of the first TTCD cluster and a road center line of the first lane. The first edge line is an edge line that is of the first TTCD cluster and that extends along a direction of the first lane. Actually, the foregoing two examples of determining the distribution status are essentially the same, that is, determining feasibility of the vehicle to bypass the first TTCD cluster in the first lane.

FIG. 4 is a diagram of a detection range of a sensing system according to an embodiment of this application.

In some possible embodiments, because a detection range of a sensing system carried on a vehicle is limited, for example, in a curve driving process, it is difficult for the sensing system to detect a change trend of a first TTCD cluster on a curve within a specific distance. Consequently, a driving strategy determined by the vehicle before or while traveling on the curve has a specific safety risk, that is, a specific detection blind area exists. For example, in a process in which the vehicle bypasses the first TTCD cluster on the curve, it is suddenly detected that a distribution status of the first TTCD cluster is suddenly changed. If a vehicle speed is high, the vehicle collides with the TTCD due to a failure of avoidance. Based on this, when a distribution status of the first TTCD cluster in a first lane is a first state, it may be determined that the driving strategy is a first strategy, where the first strategy is that the vehicle bypasses the first TTCD cluster at a first speed.

The first speed may be less than a current traveling speed of the vehicle.

Based on the technical solution, when a detection range of a sensor is limited, the vehicle can limit the speed of the vehicle in advance in a process of bypassing the first TTCD cluster, so that the vehicle can avoid a collision caused by a failure of avoidance when the distribution status of the first TTCD cluster is suddenly changed. The safety of the decision-making is improved, and robustness of the decision-making is also improved.

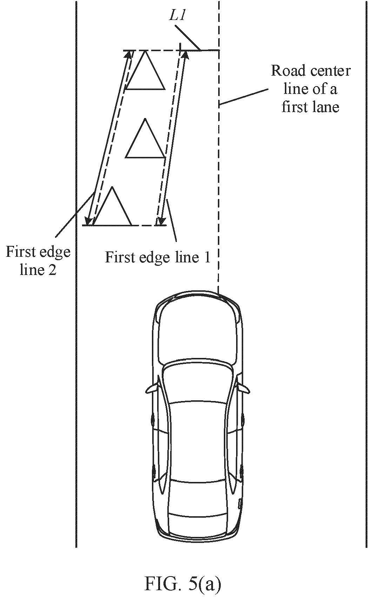

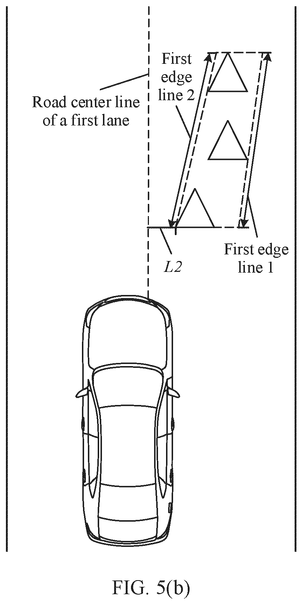

FIG. 5(a) and FIG. 5(b) are diagrams of a first TTCD cluster distributed in a first state according to an embodiment of this application.

In some possible embodiments, the first state includes: A minimum distance between a first edge line of the first TTCD cluster and a road center line of a first lane is greater than or equal to a first threshold, and the first edge line is an edge line that is of the first TTCD cluster and that extends along a direction of the first lane.

Refer to FIG. 5(a) and FIG. 5(b). It can be learned that one first TTCD cluster includes two first edge lines, namely, a first edge line 1 and a first edge line 2 in FIG. 5(a) and FIG. 5(b). However, the minimum distance between the first edge line of the first TTCD cluster and the road center line of the first lane is naturally calculated based on a first edge line closest to the road center line of the first lane.

For example, in FIG. 5(a), the first edge line 1 is closer to the road center line of the first lane than the first edge line 2. Therefore, the minimum distance between the first edge line of the first TTCD cluster and the road center line of the first lane should be calculated based on the first edge line 1 relative to the road center line of the first lane, and the minimum distance is L1.

For example, in FIG. 5(b), the first edge line 2 is closer to the road center line of the first lane than the first edge line 1. Therefore, the minimum distance between the first edge line of the first TTCD cluster and the road center line of the first lane should be calculated based on the first edge line 2 relative to the road center line of the first lane, and the minimum distance is L2.

It should be understood that, if the first edge line of the first TTCD cluster crosses the road center line of the first lane, the minimum distance between the first edge line of the first TTCD cluster and the road center line of the first lane is 0.

In some possible embodiments, the first threshold may be a preset appropriate value, for example, 0.5 m or 0.8 m, and should be specifically determined based on a width of the first lane.

In some possible embodiments, a type of the first lane may be deduced based on a quantity of lanes collected by a sensing system, to determine the width of the first lane, and then adjust the first threshold in real time. For example, it is known that a bidirectional four-lane is 2×7.5 m. In this case, the width of the first lane is 3.25 m, and a corresponding first threshold may be 0.5 m. A bidirectional six-lane is 2×11.25 m. In this case, the width of the first lane is 3.75 m, and a corresponding first threshold may be 0.6 m. A bidirectional eight-lane is 2×15 m. In this case, the width of the first lane is 3.75 m, and a corresponding first threshold may be 0.6 m.

In some possible embodiments, the first threshold may be further determined with reference to a width of an ego vehicle. This is not limited in this embodiment of this application.

Based on the technical solution, when a detection range of a sensor is limited, the vehicle can limit a speed of the vehicle in advance in a process of bypassing the first TTCD cluster, so that the vehicle can avoid a collision caused by a failure of avoidance when a distribution status of the first TTCD cluster is suddenly changed.

In some possible embodiments, a first speed may be determined by using the following method: first, determining second environment information based on the first state; and then, determining the first speed based on the second environment information.

In some possible embodiments, the second environment information includes at least one of the following: a length of the first edge line of the first TTCD cluster, an included angle between the first edge line of the first TTCD cluster and the road center line of the first lane, and a minimum distance between the vehicle and the first TTCD cluster.

In some possible embodiments, there is a correlation between each piece of data included in the second environment information and the first speed. For example, a longer first edge line indicates a lower first speed; a larger included angle between the first edge line and the road center line of the first lane indicates a lower first speed; and a smaller minimum distance between the vehicle and the first TTCD cluster indicates a lower first speed.

In addition, the second environment information may further include another type of information, for example, a historical change trend of the TTCD placed on a road, that is, a historical change trend of the first edge line of the first TTCD cluster. Then, an expected change trend of the first edge line of the first TTCD cluster is determined, and a distance between a first route and the first edge line is determined based on expected change trends of the first route and the first edge line, to determine the first speed. A shorter distance between the first route and the first edge line indicates a lower first speed.

In some possible embodiments, the first speed may be further determined based on the first route included in a first strategy. For example, a smaller minimum distance between the first route and the first TTCD cluster indicates a lower first speed.

In some possible embodiments, for determining the first speed, refer to a speed limit of a current road section, so that a speed is not lower than the speed limit of the road in a process in which the vehicle bypasses the first TTCD cluster in the first lane.

Based on the foregoing technical solution, the speed at which the vehicle bypasses the first TTCD cluster can be more appropriately determined, thereby further ensuring safety of the vehicle bypassing an obstacle.

In some possible embodiments, the second environment information may be used as an S-V soft constraint and delivered to a downstream decision-making and planning module, so that the decision-making and planning module makes a more accurate and appropriate driving decision-making based on the information.

In some possible embodiments, when a distribution status of the first TTCD cluster in the first lane is a second state, third environment information of an adjacent lane of the first lane may be further determined. Then, a road condition of the adjacent lane is determined based on the third environment information, and finally a driving strategy is determined based on the road condition of the adjacent lane.

In some possible embodiments, the second state is all statuses other than the first state. In the second state, it indicates that the current vehicle cannot bypass the first TTCD cluster in the first lane. It can be learned that the second state includes: The minimum distance between the first edge line of the first TTCD cluster and the road center line of the first lane is less than the first threshold. For example, the first edge line crosses the road center line of the first lane. In this case, the minimum distance is equal to 0, and is less than the first threshold.

Based on the foregoing technical solution, based on the distribution status of the first TTCD cluster in the first lane, it is found that the vehicle cannot bypass the first TTCD cluster in the first lane, and a driving strategy other than in-lane obstacle bypassing is determined. This improves flexibility and safety of a decision-making.

In some possible embodiments, when the distribution of the first TTCD cluster is in the second state, whether the road condition of the adjacent lane meets a first lane change condition may be comprehensively determined based on a recognition result of a TSR system, road condition information of the adjacent lane collected by the sensor carried on the vehicle, and a confidence level of corresponding information.

In some possible embodiments, the recognition result of the TSR system may include: whether a lane line between the first lane and the adjacent lane can be crossed, that is, whether lane change is allowed on a current road, or the like. The road condition information of the adjacent lane may include: whether an isolation fence exists between the first lane and the adjacent lane, whether a front of the adjacent lane is occupied, whether another vehicle is traveling on a side behind the adjacent lane, and the like.

Whether the front of the adjacent lane is occupied may be that the front of the adjacent lane is a congested road section, or the front of the adjacent lane is a construction road section, or the front of the adjacent lane is occupied by another TTCD cluster.

It should be understood that the adjacent lane of the first lane has the following meanings.

When the first lane is a right-side edge road of the entire lane, the adjacent lane indicates an adjacent lane on a left side of the first lane. Correspondingly, when the first TTCD cluster is distributed in the second state, the third environment information indicates environment information of the adjacent lane on the left side of the first lane.

When the first lane is a left-side edge road of the entire lane, the adjacent lane indicates an adjacent lane on a right side of the first lane. Correspondingly, when the first TTCD cluster is distributed in the second state, the third environment information indicates environment information of the adjacent lane on the right side of the first lane.

When the first lane is a non-edge road in the entire lane, the adjacent lane indicates adjacent lanes on two sides of the first lane. Correspondingly, when the first TTCD cluster is distributed in the second state, the third environment information indicates environment information of the adjacent lanes on two sides of the first lane.

In some possible embodiments, when the road condition of the adjacent lane meets the first lane change condition, it is determined that the driving strategy is a second strategy, where the second strategy is that the vehicle changes to the adjacent lane for traveling. When the road condition of the adjacent lane does not meet the first lane change condition, it is determined that the driving strategy is a third strategy, where the third strategy is that the vehicle brakes in the first lane.

In some possible embodiments, the first lane change condition may be determined by using the recognition result of the TSR system and the road condition information of the adjacent lane that are provided in the foregoing embodiment.

In some possible embodiments, the first lane change condition may include: The vehicle is allowed to change between the first lane and the adjacent lane, a front of the adjacent lane is not occupied, and no other vehicle travels at a lateral rear of the adjacent lane.

It should be understood that, that the road condition of the adjacent lane provided in the foregoing embodiment meets the first lane change condition indicates that all the foregoing conditions included in the first lane change condition are met. If any one of the first lane change conditions is not met, it indicates that the first lane change condition is not met.

Based on the foregoing technical solution, a front or rear traffic condition of an adjacent lane is fully obtained, and a traffic rule factor of a current road is also considered, to determine whether a vehicle can appropriately and safely change a lane, to avoid the first TTCD cluster. This avoids a safety risk caused by lane change when the vehicle does not meet the lane change condition, and further improves safety of the driving strategy.

In some possible embodiments, when the driving strategy is the third strategy, a decision-making and post-processing operation may be further performed:
controlling, based on a position relationship between a first TTCD in the first TTCD cluster and the vehicle, the vehicle to brake, where the first TTCD is a TTCD closest to the vehicle in the first TTCD cluster.

In some possible embodiments, an expected braking distance of the vehicle may be determined, to determine an operation for controlling the vehicle to brake. The braking distance may be less than a distance between the vehicle and the first TTCD.

Based on the foregoing technical solution, when the vehicle uses the third strategy, the vehicle can brake as early as possible, to reduce a collision risk of the vehicle in a braking process, make a decision-making more humanistic, and improve driving experience of a user.

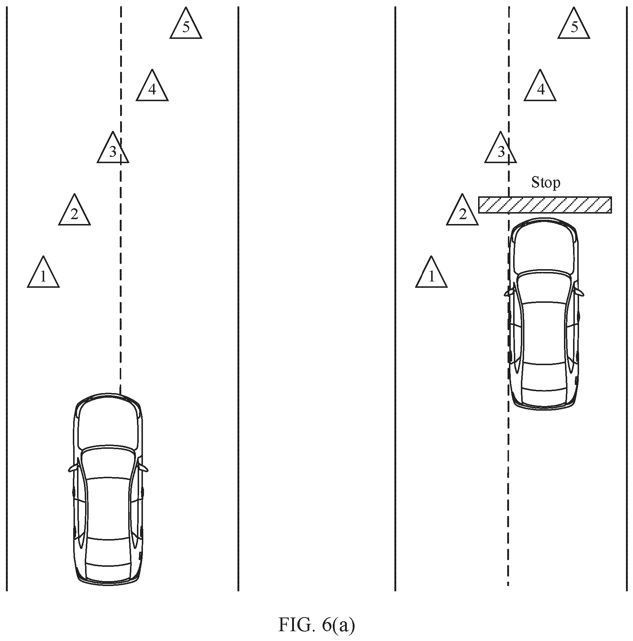

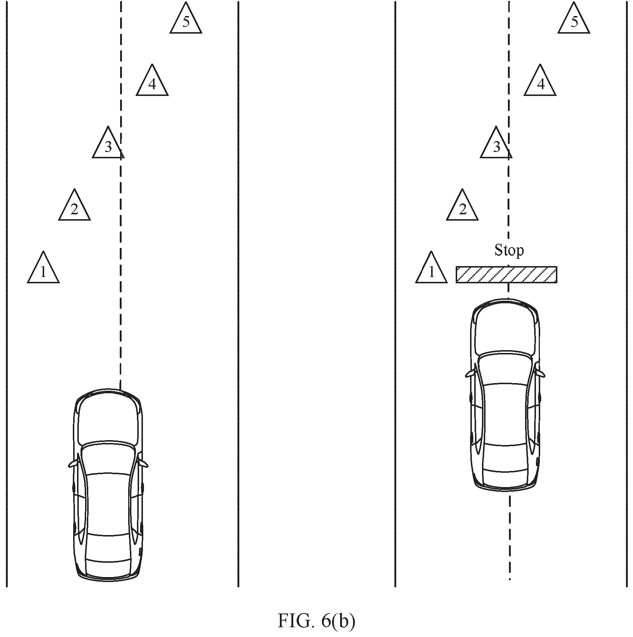

FIG. 6(a) and FIG. 6(b) are diagrams of an expected effect of decision-making post-processing according to an embodiment of this application.

FIG. 6(a) is a diagram of a parking position in a case in which decision-making and post-processing is not performed. FIG. 6(b) is a diagram of a parking position in a case in which decision-making and post-processing is performed. TTCDs in FIG. 6(a) and FIG. 6(b) are traffic cones.

Refer to FIG. 6(a). It can be learned that a vehicle detects that a traffic cone 3 in a first TTCD cluster distributed in a first lane is already located on a road center line of the first lane. Therefore, a driving decision-making is determined as a second decision-making or a third decision-making based on the foregoing decision-making method. In this embodiment, it is assumed that an adjacent lane does not meet a first lane change condition. Therefore, the third decision-making needs to be used to control the vehicle to brake. In this case, an expected position at which the vehicle brakes is determined based on the traffic cone 3, and finally the vehicle brakes ahead the traffic cone 3. Although this method can ensure that the vehicle does not collide with the first TTCD cluster, if there are some unexpected cases in a traffic environment, the vehicle may collide with another traffic subject due to a failure of avoidance, thereby introducing a safety risk. In addition, such a braking manner is low in human nature, and may not provide a sufficient sense of security for a user. Therefore, the foregoing decision-making and post-processing operation may be performed.

Refer to FIG. 6(b). It can be learned that a vehicle detects that a traffic cone 3 in a first TTCD cluster distributed in a first lane is already located on a road center line of the first lane. Therefore, a driving decision-making is determined as a second decision-making or a third decision-making based on the foregoing decision-making method. In this embodiment, it is assumed that an adjacent lane does not meet a first lane change condition. Therefore, the third decision-making needs to be used to control the vehicle to brake. Based on the foregoing decision-making and post-processing operation, an expected position at which the vehicle brakes is determined based on a traffic cone 1 closest to the vehicle, and finally the vehicle brakes ahead the traffic cone 1. In this way, the vehicle can brake in advance, to reduce a collision risk. In addition, such a braking manner is high in human nature, and may provide a sufficient sense of security for a user, thereby improving driving experience of the user.

In some possible embodiments, after the driving strategy is determined, corresponding alarm information or takeover request information may be generated, and the information is reported to a human machine interface (human machine interface, HMI) of an assisted driving system, to prompt the user to perform cooperative driving in a timely manner.

In some possible embodiments, the determined driving strategy may be further sent and displayed to the user through the HMI, to prompt the user to check whether a current driving strategy is appropriate. If the current driving strategy is inappropriate, the user may receive a takeover request, and control traveling of the vehicle.

Based on the foregoing technical solution, a decision-making result is sent and displayed to the user in real time, so that the user can obtain more decision-making information, and the user is granted a right to take over and control the vehicle. This improves a sense of driving safety of the user and ensures driving safety of the vehicle.

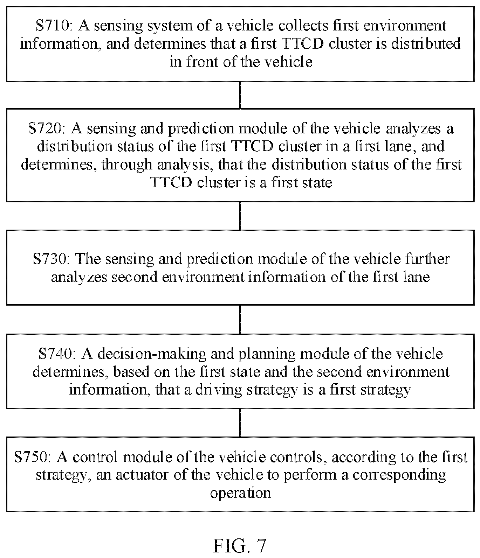

FIG. 7 is a schematic flowchart of another decision-making method according to an embodiment of this application.

In some possible embodiments, an example in which a distribution status of a first TTCD cluster in a first lane is a first state is used. In actual application, controlling a vehicle based on the foregoing decision-making method may be specifically the following steps.

S710: A sensing system of a vehicle collects first environment information, and determines that a first TTCD cluster is distributed in front of the vehicle.

S720: A sensing and prediction module of the vehicle analyzes a distribution status of the first TTCD cluster in the first lane, and determines, through analysis, that the distribution status of the first TTCD cluster is a first state.

S730: The sensing and prediction module of the vehicle further analyzes second environment information of the first lane.

The second environment information includes at least one of the following: an included angle between a first edge line and a road center line of the first lane, and a distance between the vehicle and a TTCD closest to the road center line of the first lane. Then, the second environment information is delivered to a downstream decision-making and planning module as an S-V soft constraint.

S740: The decision-making and planning module of the vehicle determines, based on the first state and the second environment information, that a driving strategy is a first strategy.

The first strategy is that the vehicle bypasses the first TTCD cluster at a first speed.

In addition, after determining a first route on which the vehicle bypasses an obstacle, the decision-making and planning module may also add a position relationship between the first route and the first edge line of the first TTCD cluster to the second environment information, so that a first decision-making determined by the vehicle is safer and more reasonable.

S750: A control module of the vehicle controls, according to the first strategy, an actuator of the vehicle to perform a corresponding operation.

Based on the foregoing technical solution, when it is determined that the vehicle can bypass the first TTCD cluster in the first lane, it is ensured that the vehicle does not collide with the first TTCD, and appropriate deceleration is further performed, to avoid a collision risk like a failure to avoid an emergency in the first lane.

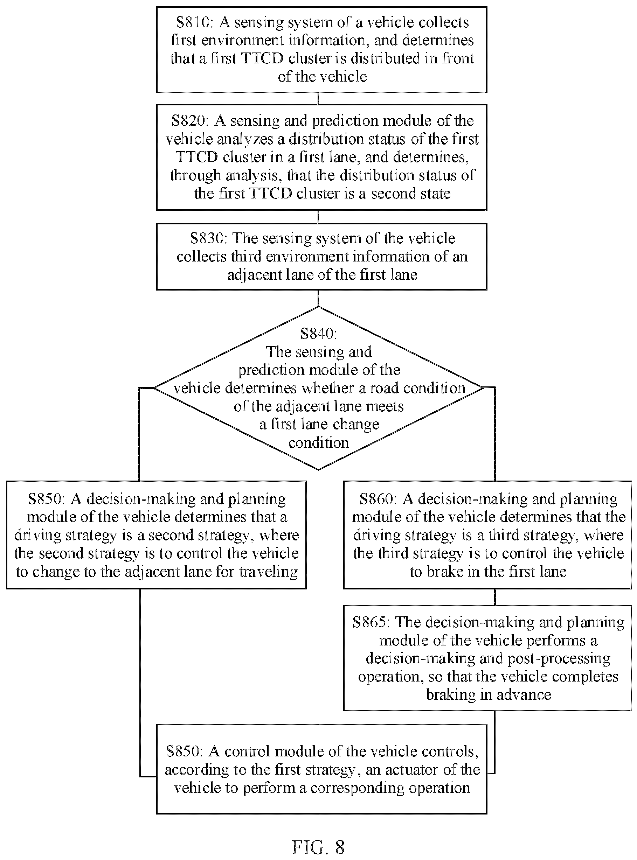

FIG. 8 is a schematic flowchart of another decision-making method according to an embodiment of this application.

In some possible embodiments, an example in which a distribution status of a first TTCD cluster in a first lane is a second state is used. In actual application, controlling a vehicle based on the foregoing decision-making method may be specifically the following steps.

S810: A sensing system of a vehicle collects first environment information, and determines that a first TTCD cluster is distributed in front of the vehicle.

S820: A sensing and prediction module of the vehicle analyzes a distribution status of the first TTCD cluster in the first lane, and determines, through analysis, that the distribution status of the first TTCD cluster is a second state.

That the distribution status of the first TTCD cluster is the second state means that the vehicle cannot bypass the first TTCD cluster in the first lane.

S830: The sensing system of the vehicle collects third environment information of an adjacent lane of the first lane.

In some possible embodiments, after S820 is performed, the sensing and prediction module may generate first indication information, where the first indication information indicates an upstream sensing system to perform an action in S830.

S840: The sensing and prediction module of the vehicle determines whether a road condition of the adjacent lane meets a first lane change condition.

If the first lane change condition is met, S850 is performed; or if the first lane change condition is not met, S860 is performed.

The first lane change condition includes: The vehicle is allowed to change between the first lane and the adjacent lane, a front of the adjacent lane is not occupied, no other vehicle travels at a lateral rear of the adjacent lane, and the like.

S850: A decision-making and planning module of the vehicle determines that a driving strategy is a second strategy, where the second strategy is to control the vehicle to change to an adjacent lane for traveling.

S860: The decision-making and planning module of the vehicle determines that the driving strategy is a third strategy, where the third strategy is to control the vehicle to brake in the first lane.

If S860 is performed, S865 may be further performed.

S865: The decision-making and planning module of the vehicle performs a decision-making and post-processing operation, so that the vehicle completes braking in advance.

S870: A control module of the vehicle controls, according to the first strategy, an actuator of the vehicle to perform a corresponding operation.

Based on the foregoing technical solution, after the vehicle cannot bypass the first TTCD cluster in the first lane, the vehicle can avoid a collision between the vehicle and the first TTCD cluster by changing a lane or braking. Further, it is effectively ensured that the vehicle does not collide with an object like another vehicle in the adjacent lane. In addition, in a braking process, the vehicle can be braked in advance, so that the decision-making is more human-like, and driving experience of a user is improved.

In addition, an embodiment of this application further provides an apparatus configured to implement any one of the foregoing methods. For example, a braking apparatus is provided. The apparatus includes a unit (or means) configured to implement any one of the foregoing braking methods.

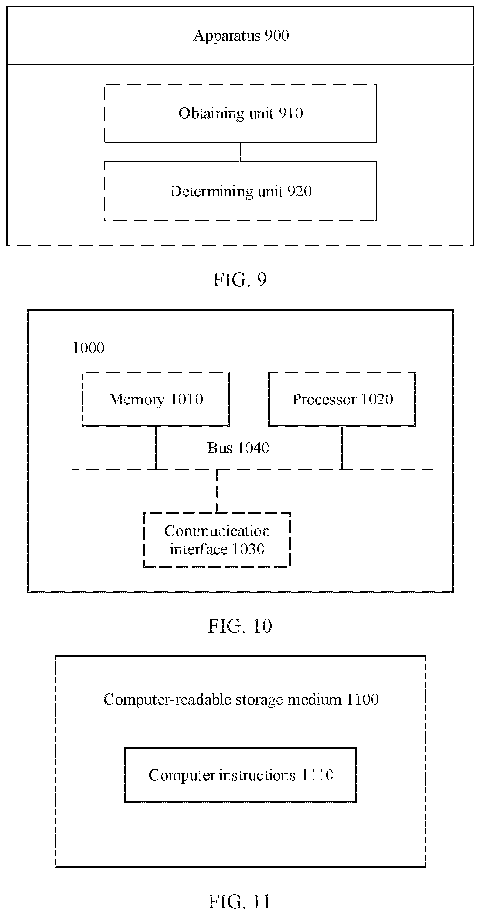

FIG. 9 is a block diagram of a decision-making apparatus 900 according to an embodiment of this application. As shown in FIG. 9, the apparatus 900 includes:
an obtaining unit 910, configured to obtain first environment information of a first lane, where the vehicle travels in the first lane; and
a determining unit 920, configured to: determine, based on the first environment information, that a first TTCD cluster is distributed in the first lane, where the first TTCD cluster includes at least one TTCD; determine a distribution status of the first TTCD cluster in the first lane, where the distribution status indicates a relative position relationship between the at least one TTCD and the first lane; and determine a driving strategy based on the distribution status of the first TTCD cluster in the first lane.

In some possible embodiments, the determining unit 920 is specifically configured to: when a distribution status of the first TTCD cluster in a first lane is a first state, determine that the driving strategy is a first strategy, where the first strategy is to control the vehicle to bypass the first TTCD cluster at a first speed.

In some possible embodiments, the first state includes: A minimum distance between a first edge line of the first TTCD cluster and a road center line of a first lane is greater than or equal to a first threshold, and the first edge line is an edge line that is of the first TTCD cluster and that extends along a direction of the first lane.

In some possible embodiments, before determining that the driving strategy is the first strategy, the determining unit 920 is further configured to: determine second environment information based on the first state, the second environment information includes at least one of the following: a length of the first edge line of the first TTCD cluster, an included angle between the first edge line of the first TTCD cluster and the road center line of the first lane, and a minimum distance between the vehicle and the first TTCD cluster; and determine a first speed based on the second environment information.

In some possible embodiments, the determining unit 920 is specifically configured to: when a distribution status of the first TTCD cluster in the first lane is a second state, determine third environment information of an adjacent lane of the first lane; determine a road condition of the adjacent lane based on the third environment information; and determine, based on the road condition of the adjacent lane, that the driving strategy is a second strategy or a third strategy.

In some possible embodiments, the second state includes that the minimum distance between the first edge line of the first TTCD cluster and the road center line of the first lane is less than the first threshold.

In some possible embodiments, the determining unit 920 is specifically configured to: when the road condition of the adjacent lane meets the first lane change condition, determine that the driving strategy is a second strategy, where the second strategy is to control the vehicle to change to the adjacent lane for traveling; or when the road condition of the adjacent lane does not meet the first lane change condition, determine that the driving strategy is a third strategy, where the third strategy is to control the vehicle to brake in the first lane.

In some possible embodiments, the first lane change condition includes: The vehicle is allowed to change between the first lane and the adjacent lane, a front of the adjacent lane is not occupied, and no other vehicle travels at a lateral rear of the adjacent lane.

In some possible embodiments, when the driving strategy is the third strategy, the determining unit 920 is further configured to determine a braking strategy of the vehicle based on a position relationship between a first TTCD in the first TTCD cluster and the vehicle, where the first TTCD is a TTCD closest to the vehicle in the first TTCD cluster.

In some possible embodiments, the distribution status of the first TTCD cluster in the first lane is identified based on a cluster fitting manner.

FIG. 10 is a block diagram of still another decision-making apparatus according to an embodiment of this application. A computer device 1000 shown in FIG. 10 includes a memory 1010, a processor 1020, and a bus 1040. Optionally, the computer device 1000 further includes a communication interface 1030. The memory 1010, the processor 1020, and the communication interface 1030 implement mutual communication connections through the bus 1040.

The memory 1010 may be a read only memory (read only memory, ROM), a static storage device, a dynamic storage device, or a random access memory (random access memory, RAM). The memory 1010 may store a program. When the program stored in the memory 1010 is executed by the processor 1020, the processor 1020 is configured to perform steps of a neural network model training method in embodiments of this application. Specifically, the processor 1020 may perform the method shown in FIG. 3.

The processor 1020 may use a general-purpose central processing unit (central processing unit, CPU), a microprocessor, an application-specific integrated circuit (application specific integrated circuit, ASIC), a graphics processing unit (graphics processing unit, GPU), or one or more integrated circuits, and is configured to execute a related program, to implement the decision-making method provided in the method embodiments of this application.

The processor 1020 may alternatively be an integrated circuit chip, and has a signal processing capability. In an implementation process, the steps of the decision-making method provided in this application may be completed by using an integrated logic circuit of hardware in the processor 1020 or instructions in a software form.

The processor 1020 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 1010. The processor 1020 reads information in the memory 1010, and completes, in combination with hardware of the processor 1020, functions that need to be performed by units included in the apparatus shown in FIG. 9, or performs the method shown in FIG. 3 in the method embodiment of this application.

The communication interface 1030 uses a transceiver apparatus, for example but not for limitation, a transceiver, to implement communication between the apparatus 1000 and another device or a communication network. For example, the training data may be obtained through the communication interface 1030.

The bus 1040 may include a path for transmitting information between the components (for example, the memory 1010, the processor 1020, and the communication interface 1030) of the apparatus 1000.

It should be understood that although only the memory, the processor, and the communications interface are shown in the foregoing apparatus 1000. However, in a specific implementation process, a person skilled in the art should understand that the apparatus 1000 may further include another component required for normal running. In addition, based on a specific requirement, a person skilled in the art should understand that the apparatus 1000 may further include hardware components for implementing other additional functions. In addition, a person skilled in the art should understand that the apparatus 1000 may alternatively include only devices required for implementing the embodiments of this application, but does not necessarily include all the devices shown in FIG. 10.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

FIG. 11 is a block diagram of a computer-readable storage medium according to an embodiment of this application. A computer-readable storage medium 1100 shown in FIG. 11 stores computer instructions 1110. When the computer instructions 1110 are executed by a processor, the method shown in FIG. 3 may be implemented.

In some possible embodiments, the computer-readable storage medium 1100 may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technologies, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory, a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A decision-making method, wherein the method is applied to a vehicle, and the method comprises:
obtaining first environment information of a first lane, wherein the vehicle travels in the first lane;
determining, based on the first environment information, that a first temporary traffic control device TTCD cluster is distributed in the first lane, wherein the first TTCD cluster comprises at least one TTCD;
determining a distribution status of the first TTCD cluster in the first lane, wherein the distribution status indicates a relative position relationship between the at least one TTCD and the first lane; and
determining a driving strategy based on the distribution status of the first TTCD cluster in the first lane.

2. The method according to claim 1, wherein the determining a driving strategy based on the distribution status of the first TTCD cluster in the first lane comprises:
when the distribution status of the first TTCD cluster in the first lane is a first state, determining that the driving strategy is a first strategy, wherein the first strategy is to control the vehicle to bypass the first TTCD cluster at a first speed.

3. The method according to claim 2, wherein the first state comprises:
a minimum distance between a first edge line of the first TTCD cluster and a road center line of the first lane is greater than or equal to a first threshold, and the first edge line is an edge line that is of the first TTCD cluster and that extends along a direction of the first lane.

4. The method according to claim 2 or 3, wherein before the determining that the driving strategy is a first strategy, the method further comprises:
determining second environment information based on the first state, wherein the second environment information comprises at least one of the following: a length of the first edge line of the first TTCD cluster, an included angle between the first edge line of the first TTCD cluster and the road center line of the first lane, and a minimum distance between the vehicle and the first TTCD cluster; and
determining the first speed based on the second environment information.

5. The method according to any one of claims 1 to 4, wherein the determining a driving strategy based on the distribution status of the first TTCD cluster in the first lane further comprises:
when the distribution status of the first TTCD cluster in the first lane is a second state, determining third environment information of an adjacent lane of the first lane;
determining a road condition of the adjacent lane based on the third environment information; and
determining, based on the road condition of the adjacent lane, that the driving strategy is a second strategy or a third strategy.

6. The method according to claim 5, wherein the second state comprises:
the minimum distance between the first edge line of the first TTCD cluster and the road center line of the first lane is less than the first threshold.

7. The method according to claim 5 or 6, wherein the determining, based on the road condition of the adjacent lane, that the driving strategy is a second strategy or a third strategy comprises:
when the road condition of the adjacent lane meets a first lane change condition, determining that the driving strategy is the second strategy, wherein the second strategy is to control the vehicle to change to the adjacent lane for traveling; or
when the road condition of the adjacent lane does not meet the first lane change condition, determining that the driving strategy is the third strategy, wherein the third strategy is to control the vehicle to brake in the first lane.

8. The method according to claim 7, wherein the first lane change condition comprises: the vehicle is allowed to change between the first lane and the adjacent lane, a front of the adjacent lane is not occupied, and no other vehicle travels at a lateral rear of the adjacent lane.

9. The method according to claim 7 or 8, wherein when the driving strategy is the third strategy, the method further comprises:
determining a braking strategy of the vehicle based on a position relationship between a first TTCD in the first TTCD cluster and the vehicle, wherein the first TTCD is a TTCD closest to the vehicle in the first TTCD cluster.

10. The method according to any one of claims 1 to 9, wherein the distribution status of the first TTCD cluster in the first lane is identified based on a cluster fitting manner.

11. A decision-making apparatus, wherein the apparatus is used in a vehicle, and the apparatus comprises:
an obtaining unit, configured to obtain first environment information of a first lane, wherein the vehicle travels in the first lane; and
a determining unit, configured to: determine, based on the first environment information, that a first temporary traffic control device TTCD cluster is distributed in the first lane, wherein the first TTCD cluster comprises at least one TTCD; determine a distribution status of the first TTCD cluster in the first lane, wherein the distribution status indicates a relative position relationship between the at least one TTCD and the first lane; and determine a driving strategy based on the distribution status of the first TTCD cluster in the first lane.

12. The apparatus according to claim 11, wherein the determining unit is specifically configured to:
when the distribution status of the first TTCD cluster in the first lane is a first state, determine that the driving strategy is a first strategy, wherein the first strategy is to control the vehicle to bypass the first TTCD cluster at a first speed.

13. The apparatus according to claim 12, wherein the first state comprises:
a minimum distance between a first edge line of the first TTCD cluster and a road center line of the first lane is greater than or equal to a first threshold, and the first edge line is an edge line that is of the first TTCD cluster and that extends along a direction of the first lane.

14. The apparatus according to claim 12 or 13, wherein before determining that the driving strategy is the first strategy, the determining unit is further configured to:
determine second environment information based on the first state, wherein the second environment information comprises at least one of the following: a length of the first edge line of the first TTCD cluster, an included angle between the first edge line of the first TTCD cluster and the road center line of the first lane, and a minimum distance between the vehicle and the first TTCD cluster; and
determine the first speed based on the second environment information.

15. The apparatus according to any one of claims 11 to 14, wherein the determining unit is specifically configured to:
when the distribution status of the first TTCD cluster in the first lane is a second state, determine third environment information of an adjacent lane of the first lane;
determine a road condition of the adjacent lane based on the third environment information; and
determine, based on the road condition of the adjacent lane, that the driving strategy is a second strategy or a third strategy.

16. The apparatus according to claim 15, wherein the second state comprises:
the minimum distance between the first edge line of the first TTCD cluster and the road center line of the first lane is less than the first threshold.

17. The apparatus according to claim 15 or 16, wherein the determining unit is specifically configured to:
when the road condition of the adjacent lane meets a first lane change condition, determine that the driving strategy is the second strategy, wherein the second strategy is to control the vehicle to change to the adjacent lane for traveling; or
when the road condition of the adjacent lane does not meet the first lane change condition, determine that the driving strategy is the third strategy, wherein the third strategy is to control the vehicle to brake in the first lane.

18. The apparatus according to claim 17, wherein the first lane change condition comprises: the vehicle is allowed to change between the first lane and the adj acent lane, a front of the adjacent lane is not occupied, and no other vehicle travels at a lateral rear of the adjacent lane.

19. The apparatus according to claim 17 or 18, wherein when the driving strategy is the third strategy, the determining unit is further configured to:
determine a braking strategy of the vehicle based on a position relationship between a first TTCD in the first TTCD cluster and the vehicle, wherein the first TTCD is a TTCD closest to the vehicle in the first TTCD cluster.

20. The apparatus according to any one of claims 11 to 19, wherein the distribution status of the first TTCD cluster in the first lane is identified based on a cluster fitting manner.

21. A decision-making apparatus, comprising a processor and a memory, wherein the processor is connected to the memory, the memory is configured to store program code, and the processor is configured to invoke the program code to perform the method according to any one of claims 1 to 10.

22. A chip system, wherein the chip system is used in an electronic device; the chip system comprises one or more interface circuits and one or more processors; the interface circuit and the processor are interconnected through a line; the interface circuit is configured to: receive a signal from a memory of the electronic device, and send the signal to the processor, wherein the signal comprises computer instructions stored in the memory; and when the processor executes the computer instructions, the electronic device performs the method according to any one of claims 1 to 10.

23. A computer-readable storage medium, wherein the computer-readable storage medium stores a computer program, and the computer program is executed by a processor to implement the method according to any one of claims 1 to 10.

24. A computer program product, wherein when the computer program code or instructions are executed on a computer, the computer is enabled to perform the method according to any one of claims 1 to 10.

25. A vehicle, comprising the apparatus according to any one of claims 11 to 21.
